# EUROPEAN PATENT APPLICATION

(11) **EP 1 403 666 A1**
(43) Date of publication of application: **31.03.2004**
(21) Application number: 02741400.2
(22) Date of filing: 02.07.2002
(51) Int. Cl.: G02B 5/22, C09K 3/00

(54) **DIIMONIUM SALT COMPOUND, AND NEAR−INFRARED RAY ABSORBING FILTER AND OPTICAL INFORMATION RECORDING MEDIUM**

(30) Priority: 04.07.2001 JP 2001202889; 09.11.2001 JP 2001344714
(71) Applicant: Nippon Kayaku Kabushiki Kaisha, Tokyo 102-8172 (JP)
(72) Inventor: KITAYAMA, Yasuyuki, Saitama-shi, Saitama 330-0835 (JP); YAMAMURA, Shigeo, Saitama-shi, Saitama 330-0038 (JP)
(74) Representative: Wablat, Wolfgang, Dr.Dr.
(86) International application number: PCT/JP2002/006698
(87) International publication number: WO 2003/005076

(57) **Abstract**

A near-infrared absorbing filter, characterized in that it contains at least one compound represented by the following 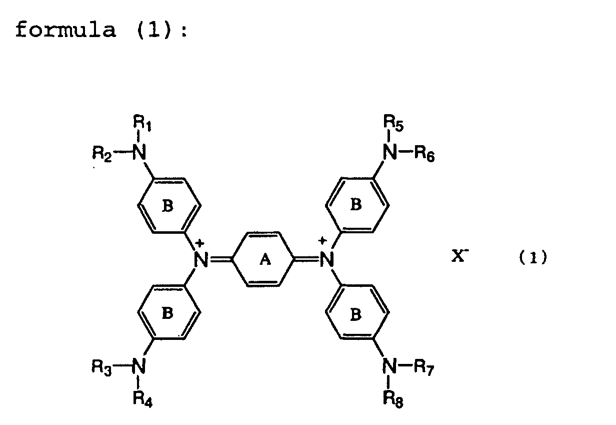 (1), wherein R₁ to R₈ may be the same or different and at least one of them is a branched alkyl group, a ring A and a ring B may have a substituent, and X represents an anion necessary for neutralizing the electric charge. The near-infrared absorbing filter is excellent in thermal resistance.

## Description

### FIELD OF THE INVENTION

This invention relates to a diimonium salt compound excellent in heat resistance and having a near-infrared absorbing power; and to a near-infrared absorbing filter, to a near-infrared absorbing composition; and to an optical in-formation recording medium, and particularly, to a near-infrared absorbing filter for plasma display panel made of the near-infrared absorbing filter.

### BACKGROUND ART

A diimonium salt compound, which is a near-infrared absorbent, has been conventionally used in wide applications such as a near-infrared absorbing filter, a heat insulating film, a pair of sun glasses and the like. Conventional diimonium salt compounds, however, include more of compounds each having a linear chain alkyl group as a terminal group and near-infrared absorbing filters using the diimonium salt compounds are generally easy to be denatured when heated or exposed to light, thereby having led to a problem of reducing a near-infrared absorbing power. Especially, when heated, a serious problem has arisen that a visible light transmittance of the filter itself is reduced in company of its decomposition and a hue thereof is modified to a greenish tone. A near-infrared absorbing filter is also used in a plasma display panel. In a plasma display panel which is a panel presenting an image using plasma light emission thereon, necessity arises for cutting off light in the infrared region using a near-infrared absorbing filter in order to prevent a malfunction in a variety of equipment that are installed in the neighborhood of the panel, each of which uses an infrared beam, such as a remote control, an automatic door, an intrusion detector or the like since the plasma light emission also includes light in the infrared region (from 800 to 1100 nm). With a conventional near-infrared absorbent, however, there has been a problem that a filter to meet such a necessity cannot be provided because of the reason described above.

Various kinds of organic dyes such as a cyanine type dye and the like have been proposed as dyes used in optical recording media containing an organic dye, especially an optical disk, an optical card and the like such as CD-R and DVD-R, which can record only once, though with a problem that such organic dyes are easily denatured on exposure to light, causing degrading a record reproduction characteristic and preservative stability. As means for solving such a problem, it has been known to add a diimonium salt or the like having a liner chain terminal group or the like, as already described in Japanese Patent Application Publication (JP-B) No. 6-26028, Japanese Patent Application Laid-Open (JP-A) No. 1-99885 and the like. In the case where a heat resistance test and a moisture-heat resistance test are conducted on a recording media manufac tured wi th such a compound, however, a problem has arisen that the diimonium salt or the like is generally degraded ahead of other components and degradation of a cyanine type dye occurred to its extremity in a subsequent lightfastness test.

### PROBLEMS THAT THIS INVENTION IS TO SOLVE

The invention has been made in light of such circumstances and it is an object of the invention to provide a near-infrared absorbing compound (a diimonium salt) having improvement on stability, especially heat resistance as compared with a conventional diimonium salt having a linear chain alkyl group; a near-infrared absorbing filter having improvement on heat resistance, suitable for a near-infrared absorbing filter for a plasma display panel and an optical recording medium, manufactured with the near-infrared absorbing compound having improvement on stability.

### DISCLOSURE OF THE INVENTION

The inventors have made serious efforts in order to solve the problems described above, with a discovery that a near-infrared absorbing compound having a structure expressed by the following formula (1) has a stability, especially an excellent heat resistance, which has lead to completion of the invention. That is to say, the present invention relates to the following aspects (1) to (7):
(1) A near-infrared absorbing filter, characterized by containing at least one compound represented by the following formula (1): 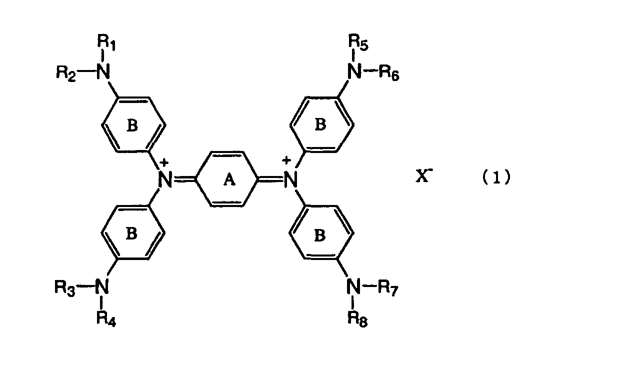 wherein R₁ to R₈ may be the same or different and at least one of them is a branched alkyl group, rings A and B may have a substituent, and X represents an anion necessary for neutralizing the electric charge;
(2) A near-infrared absorbing filter according to the aspect (1), characterized in that sites other than sites 1 and 4 on each of the rings A and B are not substituted at any of them or have, as a substituent, 1 to 4 of halogen atoms, low alkyl groups, low alkoxy groups, cyano groups and/or hydroxyl groups;
(3) A near-infrared absorbing filter according to the aspect (1) or (2), characterized in that the branched alkyl group of R₁ to R₈ are selected from the group consisting of a 1-methylethyl group, a 1,1-dimethylethyl group, a 1-methylpropyl group, a 2-methylpropyl group, a 1-methylbutyl group, a 2-methylbutyl group, a 3-methylbutyl group and a 2-ethylbutyl group;
(4) A near-infrared absorbing filter according to any of the aspects (1) to (3) for a plasma display panel;
(5) A near-infrared absorbing composition composed of a resin added with a compound expressed by the formula (1);
(6) A diimonium salt compound expressed by the following formula (1): 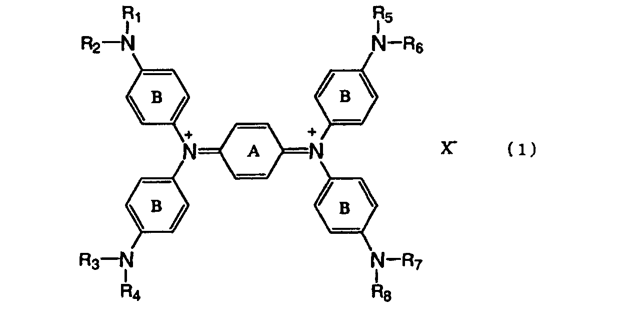 wherein R₁ to R₈ may be the same or different and at least one of them is a branched alkyl group expressed by the following formula (2), rings A and B may have a substituent, and X represents an anion necessary for neutralizing the electric charge:

   ―(CH₂)ₙ―R (2)

   wherein n represents an integer of one or more and R represents a branched alkyl group.
(7) An optical information recording medium with a recording layer including at least one compound selected from diimonium salt compounds according to the aspect (6).

### BEST MODE FOR CARRYING OUT THE INVENTION

A near-infrared absorbing filter of the invention is made containing at least one kind of a compound of a structure expressed by the general formula (1). In the general formula (1), sites other than sites 1 and 4 on each of the rings A and B may have 1 to 4 substituents or none of them. Examples of substituents that can bond at the sites include a halogen atom, a hydroxyl group, a low alkoxy group, a cyano group and a low alkyl group and the like. Examples of the halogen atom include a fluorine atom, a chlorine atom, a bromine atom and an iodine atom. Examples of the low alkoxy group include alkoxy groups having C₁ to C₅ such as a methoxy group, an ethoxy group and the like and examples of the low alkyl group include alkyl groups having C₁ to C₅ such as a methyl group, anethylgroupandthelike. Preferably, neither A nor B has a substituent or else the sites on each of A and B are substituted with a halogen atom (especially a chlorine atom or a bromine atom), a methyl group or a cyano group. Note that in the case where one of B rings has a substituent, it is preferable for a reason from synthesis that the other three B rings have the substituents in the same way and a site of the substituent is a site m relative to a nitrogen atom bonding with a phenylenediamine nucleus. It is more preferable for the reason from synthesis that neither of sites other than sites 1 and 4 on each the rings A and B has a substituent.

In the general formula (1), R₁ to R₈ may be the same or different and at least one of them is a branched alkyl group and the others each represent a linear chain alkyl group that may have a substituent, which has 1 to 8 carbon atoms.

Specific examples of such a branched alkyl group include alkyl groups having 1 to 20 carbon atoms such as a 1-methyethyl group (an i-propyl group), a 1,1-dimethylethyl group (a t-butyl group), a 1-methylpropylgroup (a sec-butyl), a 1,1-dimethylpropyl group, a 2-methylpropyl group (an iso-butyl group), an 1,2-dimethylpropyl group, a 2,2-dimethylpropyl group, a 1-methylbutyl group, a 2-methylbutyl group, a 3-methylbutyl group (an iso-amyl group), a 1,1-dimethylbutyl group, a 2,2-dimethylbutyl group, a 3, 3-dimethylbutyl group, a 1,2-dimethylbutyl group, a 2-ethylbutyl group and the like, among which an alkyl group having 1 to 10 carbon atoms is preferable.

The substituents other than a branched alkyl group in R₁ to R₈ are preferably selected from linear chain alkyl groups each of which may have a substituent and has 1 to 8 carbon atoms. Specific examples of the linear chain alkyl groups include an ethyl group, an n-propyl group, an n-butyl group and the like and examples of substituents that can bond with any of the linear chain alkyl groups include a cyano group; a hydroxyl group; halogen atoms such as a fluorine atom, a chlorine atom, a bromine atom and the like; alkoxy groups each having 1 to 6 carbon atoms such as a methoxy group, an ethoxy group, an n-propoxy group, an n-butoxy group and the like; alkoxyalkoxy groups each having 2 to 8 carbon atoms such as a methoxymethoxy group, an ethoxymethoxy group, methoxyethoxy group, an ethoxyethoxy group, a methoxypropoxy group, a methoxybutoxy group, an ethoxybutoxy group and the like; alkoxyalkoxyalkoxy groups each having 3 to 15 carbon atoms such as a methoxymethoxymethoxy group, a methoxymethoxyethoxy group, a methoxyethoxyethoxy group, an ethoxyethoxyethoxy group and the like; an allyloxy group; aryloxy groups each having 6 to 12 carbon atoms such as an aryloxy group, a phenoxy group, a tolyloxy group, a xylyloxy group, a naphthyloxy group and the like; alkoxycarbonyl groups each having 2 to 7 carbon atoms such as a methoxycarbonyl group, an ethoxycarbonyl group, an n-propoxycarbonyl group, an isopropoxycarbonyl group, an n-butoxycarbonyl group and the like; alkylcarbonyloxy groups each having 2 to 7 carbon atoms such as a methylcarbonyloxy group, an ethylcarbonyloxy group, an n-propylcarbonyloxy group, an n-butylcarbonyloxy group and the like; and alkoxycarbonyloxy groups each having 2 to 7 carbon atoms such as a methoxylcarbonyloxy group, an ethoxycarbonyloxy group, an n-propoxycarbonyloxy group, an n-butoxycarbonyloxy group and the like.

Preferable among the examples of branched alkyl groups in R₁ to R₈ described above are, for example, a 1-methylethyl group, a 1,1-dimethylethyl group, a 1-methylpropylgroup, a 2-methylpropyl group, a 1-methylbutyl group, a 2-methylbutyl group, a 3-methylbutyl group, a 2-ethylbutyl group and the like.

X is an anion required for neutralization of an electric charge and in the case where X is a divalent anion, one mole is necessary and in the case where X is a monovalent anion, two moles are necessary. Such an anion is selected from organic acid anions or inorganic anions. Specific examples of the organic acid anions include organic carboxylate ions such as an acetate ion, a lactate ion, a trifluoroacetate ion, a propionate ion, a benzoate ion, an oxalate ion, a succinate ion, a stearate ion and the like; organic sulfonate ions such as a methanesulfonate ion, a toluenesulfonate ion, a naphthalenemonosulfonate ion, a naphthalenedisulfonate ion, a chlorobenzesulfonate ion, a nitrobenzenesulfonate ion, a dodecylbenzenesulfonate ion, a benzenesulfonate ion, an ethanesulfonate ion, a trifluoromethanesulfonate ion and the like; and organic borates such as a tetraphenylborate ion, a butyltriphenylborate and the like, among which preferable are alkylsulfonate ions and alkylarylfulfonate ions such as a trifluoromethanesulfonate ion, a toluenesulfonate ion and the like.

Examples of the inorganic anion include halogen ions such as a fluorine ion, a chlorine ion, a bromine ion and an iodine ion; a thiocyanate ion, ahexafluoroantimonateion, aperchlorate ion, a periodate ion, a nitrate ion, a tetrafluoroborate ion, a hexafluorophosphate ion, a molybdate ion, a tungstate ion, a titanate ion, a vanadata ion, a phosphate ion, a borate ion and the like, among which preferable are a perchlorate ion, an iodine ion, a tetrafluoroborate ion, a hexafluorophosphate ion, and a hexafluoroantimanate ion and the like.

Preferable among the anions are, for example, a perchlorate ion, an iodine ion, a tetrafluoroborate ion, a hexafluorophosphate ion, a hexafluoroantimonate ion, a trifluoromethanesulfonate ion and a toluenesulfonate ion and the like.

In the formula (2), n is an integer from 1 to 17 and preferably an integer from 1 to 7. R is a branched alkyl group and a group expressed by the formula (2) has 4 to 20 carbon atoms in total.

Then, in Tables 1 to 3, there are shown specific examples of near-infrared absorbing compounds expressed by the general formula (1) of the invention. In Tables 1 to 3, branching states are represented such that i- represents iso-, s- sec-and t- tert- and TsO represents a toluenesulufonate ion. As to A and B, that neither of sites other than sites 1 and 4 of each on them is substituted is expressed by "4H." As to R₁ to R₈, that all of R₁ to R₈ are an iso-buyl group, that is that 4 combinations of (R₁ and R₂), (R₃ and R₄), (R₅ and R₆) and (R₇ and R₈) are each a pair of iso-butyl groups is expressed by [4 (i-C₄H₉, i-C₄H₉)] for short and that 4 combinations of (R₁ and R₂), (R₃ and R₄), (R₅ and R₆) and (R₇ and R₈) are each a pair of iso-amyl groups (-C₂H₄CH(CH₃)₂) is expressed by [4(i-C₅H₁₁, i-C₅H₁₁) for short. That, for example, one of of R₁ to R₈ is a n-butyl alkyl and the rest are each an iso-butyl group, namely that an n-butyl group is included in one of 4 combinations and the rest three combinations are each a pair of iso-butyl groups is expressed by [3(i-C₄H₉, i-C₄H₉) (i-C₄H₉, n-C₄H₉)] for short.
Note that for compounds Nos. 23 and 24, the four B rings are the same and a site of a substituent is a site m relative to a nitrogen atom that bonds with a phenylenediamine nucleus.

**TABLE 1**

| No. | (R1,R2) (R3,R4) (R5,R6) (R7,R8), | A, | B, | X |
|---|---|---|---|---|
| 1 | 4(i-C4H9, i-C4H9), | 4H, | 4H, | SbF6 |
| 2 | 4(i-C4H9, i-C4H9), | 4H, | 4H, | PF6 |
| 3 | 4(i-C4H9, i-C4H9), | 4H, | 4H, | BF4 |
| 4 | 4(i-C4H9, i-C4H9), | 4H, | 4H, | ClO4 |
| 5 | 4(i-C5H11, i-C5H11), | 4H, | 4H, | SbF6 |
| 6 | 4(i-C5H11, i-C5H11), | 4H, | 4H, | PF6 |
| 7 | 4 i-C5H11, i-C5H11), | 4H, | 4H, | BF4 |
| 8 | 4(i-C5H11, i-C5H11), | 4H, | 4H, | ClO4 |
| 9 | 4(s-C4H9, s-C4H9), | 4H, | 4H, | PF6 |
| 10 | 4(s-C4H9, s-C4H9), | 4H, | 4H, | SbF6 |
| 11 | 4(C2H3(C2H5)2, C2H3(C2H5)2), | 4H, | 4H, | PF6 |
| 12 | 4(C2H3(C2H5)2, C2H3(C2H5)2), | 4H, | 4H, | SbF6 |

**TABLE 2**

| No. | (R1,R2)(R3,R4)(R5,R6)(R7,R8), | A, | B, | X |
|---|---|---|---|---|
| 13 | 4(i-C4H9, i-C4H9), | 4H, | 4H, | TsO |
| 14 | 4(i-C5H11, i-C5H11), | 4H, | 4H, | TsO |
| 15 | 4(CH2CH(CH3)C2H5, CH2CH(CH3)C2H5), | 4H, | 4H, | SbF6 |
| 16 | 4(CH2CH(CH3)C2H5, CH2CH(CH3)C2H5), | 4H, | 4H, | ClO4 |
| 17 | 4(CH2CH(CH3)C2H5, CH2CH(CH3)C2H5), | 4H, | 4H, | PF6 |
| 18 | 4(CH2CH(CH3)C2H5, CH2CH(CH3)C2H5), | 4H, | 4H, | BF4 |
| 19 | 4(t-C4H9, t-C4H9), | 4H, | 4H, | SbF6 |
| 20 | 4(t-C4H9, t-C4H9), | 4H, | 4H, | PF6 |
| 21 | **4**(i-C4H9, i-C4H9), | Cl, | 4H, | PF6 |
| 22 | **4**(i-C5H11, i-C5H11), | CH3, | 4H, | BF4 |
| 23 | 4(C2H3(C2H5)2, C2H3(C2H5)2), | 4H, | Cl, | ClO4 |
| 24 | 4(i-C4H9, i-C4H9), | 4H, | CH3, | SbF |

**TABLE 3**

| No. | (R1,R2) (R3,R4) (R5,R6) (R7,R8), | A, | B, | X |
|---|---|---|---|---|
| 25 | 3(i-C4H9,i-C4H9)(i-C4H9,n-C4H9), | 4H, | 4H, | SbF6 |
| 26 | 3(i-C4H9,i-C4H9)(i-C4H9,n-C4H9), | 4H, | 4H, | PF6 |
| 27 | 3(i-C4H9,i-C4H9)(i-C4H9,n-C4H9), | Cl, | 4H, | ClO4 |
| 28 | 3(i-C5H11,i-C5H11)(i-C5H11,n-C4H9), | 4H, | 4H, | SbF6 |
| 29 | 3(i-C5H11,i-C5H11)(i-C5H11,n-C4H9), | 4H, | 4H, | PF6 |
| 30 | 3(i-C5H11,i-C5H11)(i-C5H11,n-C3H7), | 4H, | 4H, | BF4 |
| 31 | 4(s-C4H9,s-C4H9) )(s-C4H9,n-C4H9), | 4H, | 4H, | SbF6 |
| 32 | 3(i-C4H9,i-C4H9)(i-C4H9,n-C3H6CN), | 4H, | 4H, | PF6 |
| 33 | 3(i-C4H9,i-C4H9)(i-C4H9,C2H4OCH3), | 4H, | 4H, | PF6 |
| 34 | 3(i-C5H11,i-C5H11)(i-C5H11,n-C3H6CN), | 4H, | 4H, | BF4 |
| 35 | 3(i-C5H11,i-C5H11)(i-C5H11,C2H4OCH3), | 4H, | 4H, | ClO4 |
| 36 | 3(i-C4H9,i-C4H9)(i-C4H9,n-C3H6CN), | Cl, | 4H, | SbF6 |

A compound expressed by the general formula (1) used in a near-infrared absorbing filter of the invention can be obtained by the following method described, for example, in JP-B No. 43-25335. That is, p-phenylenediamine and 1-chloro-4-nitrobenzene are caused to react with each other according to a Ullmann reaction and an amino compound expressed by the following formula (3) obtained by the reaction is reduced: 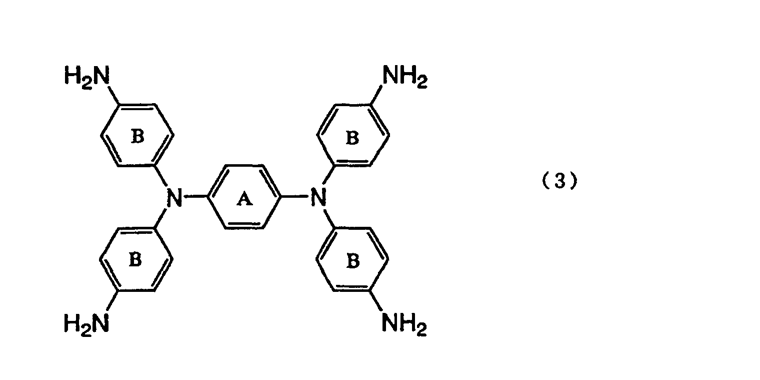 wherein rings A and B are as defined in the above description, is further caused to react with a halogenated compound corresponding to desired R₁ to R₈ (for example, in the case where R₁ is an i-C₄H₉, the amino compound is caused to react with BrCH₂CH(CH₃)₂) in an organic solvent, preferably an aqueous polar solvent such as DMF, DMI or NMP, at a temperature in the range of from 30 to 160°C, preferably in the range of from 50 to 140°C; thereby obtaining a compound with substituents (R₁ to R₈) being all the same (hereinafter referred to as fully substituted compound). In the case where a compound other than a fully substituted compound is synthesized, for example in the case where Compound No. 25 is synthesized, an amino compound is at first caused to react with predetermined moles of a reagent (BrCH₂CH(CH₃)₂) (7 mol relative to 1 mol of the amine compound expressed by the formula (3)) to introduce an iso-butyl group into each of 7 groups of (R₁ to R₈) as a substituent and thereafter, the amine compound is caused to react with necessary moles of a corresponding reagent (BrC₄H₉) (1 mol relative to 1 mol of the amine compound expressed by the formula (3)) in order to introduce the rest substituent (an n-butyl group). A compound other than the fully substituted compound can be obtained by a method similar to a production method of Compound No. 25 exemplified.

Thereafter, the compound synthesized as described above is subjected to an oxidation reaction by adding an oxidizing agent corresponding to X of the formula (1) (for example, a silver salt) into a solution of the compound in an organic solvent, preferably an aqueous polar solvent such as DMF, DM1, NMP or the like at a temperature in the range of 0 to 100°C, preferably in the range of from 5 to 70°C. With two equivalents of the oxidizing agent added, a diimonium salt compound expressed by the general formula (1) of the invention is obtained, while with one equivalent thereof added, a monovalent aminium salt compound (hereinafter referred to as an aminium compound) is obtained.

Alternatively, a compound expressed by the general formula (1) can also be synthesized in which the above compound synthesized is oxidized by an oxidizing agent such as silver nitrate, silver perchlorate, cupric chloride or the like and thereafter, an acid or a salt releasing a desired anion is added into the reaction solution to conduct a salt exchange.

A near-infrared absorbing filter of the invention may be a structure in which a layer including the above near-infrared absorbing compound is provided on a substrate as well as a structure in which a substrate itself is a layer made of a resin composition (or a cured product thereof) containing a near-infrared absorbing compound. As a substrate, any of substrates that can generally be used in a near-infrared absorbing filter can be used without specifically limiting to a particular substrate and a resin substrate is usually employed. A thickness of a near-infrared absorbing compound containing layer is generally on the order in the range of from 0.1 µm to 10 mm and appropriately determined according to a purpose such as a near-infrared cut-off percentage. A content of a near-infrared absorbing compound is also appropriately determined depending on a target near-infrared cut-off percentage.

As a resin serving as substrate, preferable is a resin with a transparency as high as possible in the forms of a resin sheet or a resin film and specific examples thereof include vinyl compounds such as polyethytlene, polystyrene, polyacrylic acid, polyacrylic acid ester, polyvinyl acetate, polyacrylonitrile, polyvinyl chloride, polyvinyl fluorideandthe like, andaddition polymers thereof; vinyl compounds, or vinyl compound or fluorine containing vinyl compound copolymers such as polymethacrylic acid, polymethacrylate, polyvinylidene chloride, ployvinylidene fluoride, polyvinylidence cyanide, polyvinylidene fluoride/trifluoroethylene copolymer, vinylidene fluoride/tetrafluoroethylene copolymer, vinylidene cyanide/vinyl acetate copolymer and the like; fluorine containing resins such as polytrifluoroethylene, polytetrafluoroethylene, polyhexafluoropropylene and the like; polyamides such as Nylon 6, Nylon 66 and the like; polyimide; polyurethane; polypeptide; polyesters such as polyethylene terephthalate and the like; polycarbonate; polyethers such as polyoxymethylene and the like; epoxy resin; polyvinyl alcohol; polyvinyl butyral and the like.

As a method for manufacturing a near-infrared absorbing filter of the invention, no specific limitation is imposed thereon and the following method, for example, can be employed. For example, (1) a method in which the above near-infrared absorbing compound is kneaded into a resin to heat mold the composition into a resin sheet or a resin film, (2) a method in which the above compound and a resin monomer or a preliminary polymer thereof are subjected to cast polymerization in the presence of a polymerization catalyst to manufacture a resin sheet or a resin film, (3) a method in which a coating solution containing the above compound is prepared to coat the solution on a transparent resin sheet, a transparent film or a transparent glass sheet, and (4) a method in which an adhesive agent is mixed into the above compound to fabricate a ply resin sheet, a ply resin film or ply glass sheet.

In the manufacturing method (1), for example, while a processing temperature, a film formation condition (or a resin sheet forming condition) or the like, is different more or less according to a resin in use, a compound of the invention is added into powder or pellets of a substrate resin to heat and melt the mixture at a temperature from 150 to 350°C and to thereafter mold the mixture into a resin sheet or to extruding it into a film (a resin sheet) using an extruder. An addition amount of the above near-infrared absorbing compound is different according to a thickness of a resin sheet or a film to be manufactured, an absorption intensity, a visible light transmittance or the like, while the content of the near-infrared absorbing compound when used is generally in the range of from 0.01 to 30 wt %, and preferably in the range of 0.03 to 15 wt % relative to a weight of a binder resin.

In the manufacturing method (2) in which cast polymerization is conducted using the above mixture of a compound and a resin monomer or a preliminary polymer thereof in the presence of a polymerization catalyst, the mixture is cast in a mold to cure through a reaction or else the mixture is cast into a metal mold to leave it until it is hardened to thus mold it. Many kinds of resins can be molded in this method and specific examples of such resins include an acrylic resin, diethyleneglycolbis (allylcarbonate) resin, epoxy resin, phenol-formaldehyde resin, polystyrene resin, silicone resin and the like. Among the methods, preferable is a casting method employing a bulk polymerization of methyl methacrylate through which an acrylic sheet excellent in hardness, heat resistance and chemical resistance is obtained.

As a polymerization catalyst, a known radical thermopolymerization initiator can be used and examples thereof include peroxides such as a benzoyl peroxide, a p-chlorobenzoyl peroxide, a diisopropylperoxycarbonate and the like; and azo compounds such as an azobisisobutylonitrile and the like. A content thereof is generally in the range of from 0.01 wt % to 5 wt % relative to a total amount of a mixture. A heating temperature in thermopolymerization is generally in the range of from 40 to 200°C and a polymerization time is on the order from 30 min to 8 hr. In addition to thermopolymerization, a photopolymerization method can also be employed in which a photo-initiator and a sensitizer are added.

As methods categorized in the method (3), there have been a method in which a compound used in the invention is dissolved inabinderresinandanorganic solvent to formacoating solution, a method in which a compound of the invention is pulverized into fine particles to disperse into water to thereby form an aqueous coating solution and the like method. In the former method, examples of binder resins that can be used include an aliphatic ester resin, acrylic resin, melamine resin, urethane resin, an aromatic ester resin, polycarbonate resin, a polyvinyl based resin, an aliphatic polyolefin resin, an aromatic polyolefin resin, polyvinyl alcohol resin, a polyvinyl modified resin and the like, and copolymers thereof.

Examples of solvents that can be used include solvents of a halogen type, an alcohol type, a ketone type, an ester type, an aliphatic hydrocarbon type, an aromatic hydrocarbon type and an ether type, and mixtures thereof. While a concentration of a near-infrared absorbing compound of the invention is different according to the thickness, the absorption intensity or the visible light transmittance of a coat to be formed, the concentration is generally in the range of from 0.1 to 30 wt % relative to an amount of a binder resin.

A near-infrared absorbing filter can be obtained by coating a coating solution prepared as described above on a transparent resin film, a transparent resin sheet, a transparent glass or the like with a spin coater, a bar coater, roll coater, a spray coater or the like.

In the method (4), known transparent adhesive agents, for example, general adhesive agents for resin such as a silicon based adhesive agent, a urethane based adhesive agent, an acrylic based resin agent and the like; and adhesive agents for ply glass such as a polyvinyl butyral adhesive agent, an ethylene-vinyl acetate based adhesive agent and the like can be used. A transparent resin sheet and a transparent resin sheet, a resin sheet and a resin film, a resin sheet and glass, a resin film and a resin film, a resin film and glass, or glass and glass are adhered to each other to fabricate a filter using an adhesive agent in which a compound of the invention in a content of from 0.1 to 30 wt % is added.

Common adhesives used in resin molding such as an ultraviolet absorbent, a plasticizer and the like may be added when kneading and mixing of components according to a method.

In this way, in each of the methods from (1) to (4), a near-infrared absorbing composition obtained by adding a compound of the invention expressed by the formula (1) to a resin is included in the invention.

While a near-infrared absorbing filter of the invention preferably uses a diimonium salt compound expressed by the general formula (1), an aminium compound of a corresponding structure may also be used. In the case where an aminium compound isused, thecompoundmaybeusedaloneortogetherwithadiimonium compound of the general formula (1). In the same case, an aminium compound may be used in a mixture with a different near-infrared absorbing compound Examples of other near-infrared absorbing compounds that can be used together with an aminium compound include a phthalocyanine type dye, a cyanine type dye, a dithiol nickel complexand the like. Inaddition, near-infraredabsorbing compounds of inorganic metals can be used together with the diimonium salt compound and examples of such metals include metal copper; copper compounds such as copper sulfide and copper oxide; metal mixtures including zinc oxide as a main component; a tungsten compound, ITO, ATO and the like.

In order to modify a color tone of a filter, a dye having absorption in the visible region is preferably added in a content of range in which it does not disturb an effect of the invention. Alternatively, a method may also adopted in which a filter is prepared that contains a tone adjusting dye only and subsequently, the filter is adhered to a near-infrared absorbing filter of the invention.

The higher a visible light transmittance of such a near-infrared absorbing filter, when the filter is used as a front sheet of a display, the better it is and necessary to at least 40 % and preferably 50 % or more. A cut-off region of near-infrared is preferably in the range of from 800 to 900 nm and more preferably in the range of from 800 to 1000 nm in which region it is desired that an average transmittance of near-infrared is 50% or less, more preferably 30% or less, further more preferably 20% or less and especially preferably 10% or less. Therefore, it is preferable to use a diimonium compound expressed by the general formula (1) without using an aminium compound having a general tendency of lower transmittance of visible light.

An optical recording medium of the invention has a recording layer provided on a substrate and the recording layer is characterized by containing at least one compound selected from the group consisting diimonium compounds expressed by the general formula (1) and/or aminium compounds. A compound expressed by the general formula (1) and an aminium compound may be used either alone or in a mixture, when required, composed such that one compound or more selected from the group consisting of compounds expressed by the general formula (1) and one compound or more selected from the group consisting of aminium compounds.

In a recording layer of an optical layer of the invention, a diimonium compound of the general formula (1) and an aminium compound can be contained ei ther alone or in a mixture wi th various kinds of additives such as a binder and the like. In this case, information is recorded by a diimonium compound expressed by the general formula (1) and/or an aminium compound.

By incorporating a diimonium compound expressed by the general formula (1) and/or an aminium compound into a recording layer of an optical recording medium on which information is recorded by an organic dye, lightfastness of the optical recording medium can be improved. Such an optical recording medium is one kind of optical recording media of the invention.

In an optical recording medium in which a diimonium compound of the general formula (1) and/or an aminium compound is included in order to improve lightfastness, examples of organic dyes that can be used together with the compounds include generally known dyes such as a cyanine type dye, a squalilium type dye, an indoaniline type dye, a phthalocyanine type dye, an azo type dye, a merocyanine type dye, a polymethine type dye, a naphthoquinone type dye, a pyririum type dye and the like.

A diimonium compound of the general formula (1) and/or an aminium compound is generally used in the range of 0.01 to 10 mol and preferably in the range of from 0.03 to 3 mol relative to 1 mol of the organic dye.

An optical medium of the invention is of a structure in which a recording layer containing a diimonium compound of the general formula (1) and/or an aminium compound and a dye, when desired, is provided on a substrate and a reflective layer and a protective layer, when required, are further provided. Any of known substrates can be used. Examples thereof include a glass sheet, a metal sheet, a plastic sheet, a film and the like and examples of resins that are used for manufacturing a substrate include acrylic resin, polycarbonate resin, methacrylic resin, polysulfone resin, polyimide resin, non-crystalline polyolef in resin, polyester resin, polypropylene resin and the like. Examples of shapes of a substrate that are named include a disk, a card, a sheet, a roll film and other various kinds of shapes.

Guide grooves may also be formed on a glass or plastic substrate in order to facilitate tracking in recording. An undercoating layer made of a plastic binder, or an inorganic oxide, a inorganic sulfide or the like may be provided on a glass or plastic substrate and preferable is an undercoating layer lower in thermal conductivity than a substrate.

A recording layer in an optical recording medium of the invention can be obtained in a procedure in which, for example, a combination of a diimonium compound of the general formula (1) and/or an aminium compound, and preferably a combination of a diimonium compound of the general formula (1) and/or an aluminum compound and an organic dye as another component is dissolved into a known organic solvent, for example tetrafluoroporpanol (TFP), octafluoropentanol (OFP), diacetonealcohol, methanol, ethanol, butanol, methylcellosolve, ethylcellosolve, dichloroethane, isophorone, cyclohexanone or the like, a proper binder is added according to a necessity to the solution and the solution is coated on a substrate by a spin coater, a bar coater, a roll coater or the like. A recording layer in an optical recording medium of the invention can also be achieved by a vacuum evaporation method, a sputtering method, a doctor blade method, a casting method, a dipping method in which a substrate is dipped into a solution, or the like. Examples of binders that can be used include acrylic resin, urethane resin, epoxy resin or the like.

A film thickness of a recording layer is preferably in the range of from 0.01 µm to 5 µm and more preferably in the range of from 0.02 µm to 3 µm, taking into consideration a recording sensitivity and a reflectance.

In an optical recording medium of the invention, an undercoating layer can be provided on a lower side of a recording layer according to a necessity and a protective layer can be provided on an upper side of the recording layer and in addition, a reflective layer can be provided between the recording layer and the protective layer. In the case where a reflective layer is provided, the reflective layer is made of a metal such as gold, silver, copper, aluminum or the like and preferably gold, silver or aluminum, where the metals may be used either alone or in an alloy of two or more kinds of metals. A reflective layer is formed by a vacuum evaporation method, a sputtering method, an ion plating method or the like. A thickness of such a reflective layer is in the range of from 0. 02 µm to 2 µm. A protective layer that may be provided on the upper side of a reflective layer is generally formed in aprocedure inwhichanultraviolet curable resin is applied by a spin coating method and thereafter the coat is illuminated with ultraviolet and cured. Examples of materials used for forming a protective film include epoxy resin, acrylic resin, silicone resin, urethane resin and the like and a thickness of such a protective layer is commonly in the range of from 0.01 to 100 µm.

Recording of information or formation an image on an optical recording medium of the invention is performed by illuminating a recording layer with a high energy beam of laser rays, for example semiconductor laser rays, helium-neon laser rays, He-Cd laser rays, YAG laser rays or Ar laser rays, which form a spot by collection of the rays, through a substrate or from the other side of a substrate, while reading of information or an image is performed by illuminating a recording layer with a low output laser beam to detect a difference between an amount of reflected light or a transmitted light of a pit section and that of a portion where no pit is formed.

A near-infrared absorbing filter of the invention can be used not only in application such as a front sheet of a display, but also in application of a filter and a film each necessary for cutting off infrared, for example a heat insulating film, an optical product, a pair of sun glasses and the like.

A near-infrared absorbing filter of the invention is excellent in absorbing near-infrared of frequencies in a wide range of the near-infrared region, while showing a very high transmittance in the visible light region. A near-infrared absorbing filter of the invention is high in solubility and processability as compared with a conventional near-infrared absorbing filter including a diimonium salt having a linear chain terminal group. Since a near-infrared absorbing compound of the invention is especially very excellent in heat resistance and hard to cause a reaction such as decomposition during a heat resistance test, a near-infrared absorbing filter can be obtained in which almost no coloring occurs in a visible section thereof. Since a near-infrared absorbing compound of the invention has such a characteristic, it can be suitably used in applications such as a near-infrared absorbing filter, a near-infrared absorbing film such as a heat insulating film and a pair of sun glasses and especially suited for a near-infrared absorbing filter for a plasma display.

An optical recording medium of the invention can provide an optical recording medium exhibiting great improvement on durability in repetition reproduction, moisture-heat resistance and lightfastness.

### EXAMPLES

While further specific description will be given of the invention using examples below, it should be understood that the invention is not limited to the examples. Note that in the examples, "part" represents "part by weight, " unless otherwise specified.

### Example Synthesis 1

### (1) Synthesis of N,N,N',N'-tetrakis[di{p-di(iso-butyl)aminophenyl}aminophenyl]-p-phenylenediamine

Added into 30 part of DMF were 3.8 parts of N,N,N',N' -tetrakis(aminophenyl)-p-phenylenediamine, 21 parts of iso-butylbromide, and 15 parts of potassium carbonate, and a reaction was caused in the solution for 1 hr at 80°C, for 7 hr at 90°C and for 1 hr at 130°C. After the reaction solution was cooled, it was filtered, 30 parts of iso-propanol was added into the filtrate and the mixture was agitated for 1 hr at 5°C or lower. After produced crystal was washed with methanol, the crystal was dried to obtain 2.5 parts of crystal in light brown color.
Melting point: 159 to 167°C (DSC)

### (2) Synthesis of Compound No.1

Added into 10 parts of DMF was 1 part of the compound synthesized in the process (1) and the mixture was heated at 60°C to dissolve the compound into DMF and thereafter, added into the solution was 0.78 part of silver hexafluoroantimonate dissolved in 10 parts of DMF, followed by a reaction for 30 minutes. After the reaction solution was cooled, precipitated silver was filtered out. Ten parts of water is slowly dropwise added into the filtrate, followed by agitation for 15 minutes after addition was over. Produced black crystal was filtered out, washed with 50 parts of water and a cake thus obtained was dried to obtain 0.5 part of Compound No. 1.
λmax: 1104 nm (dichloromethane)
Absorption coefficient: 100,000
Decomposition temperature: 259°C (TG-DTA)

### Example Synthesis 2

Synthesis was conducted in a similar fashion to that in Example Synthesis 1 except that in the reaction (2) of Example Synthesis 1, 0.58 part of silver hexafluorophosphate was used instead of 0.78 part of silver hexafluoroantimonate to obtain 0.5 part of Compound No. 2.
λmax: 1104 nm (dichloromethane)
Absorption coefficient: 93,200
Decomposition temperature: 205°C (TG-DTA)

### Example Synthesis 3

Synthesis was conducted in a similar fashion to that in Example Synthesis 1 except that in the reaction (1) of Example Synthesis 1, iso-amylbromide was used instead of iso-butylbromide to obtain N,N,N',N'-tetrakis[di{p-di(iso-amyl)-aminophenyl}aminophenyl]-p-phenylenediamine
Melting point: 104 to 107°C (DSC)

This compound was reacted with silver hexafluoroantimonate in a similar fashion to that in the reaction (2) of Example Synthesis 1 to obtain Compound No. 5.
λmax: 1106 nm (dichloromethane)
Absorption coefficient: 109,000
Decomposition temperature: 278°C (TG-DTA)

### Example Synthesis 4

Synthesis was conducted in a similar fashion to that in Example Synthesis 3 except that in the reaction of Example Synthesis 3, silver hexafluorophosphate was used instead of silver hexafluoroantimonate to obtain Compound No. 6.
λmax: 1102 nm (dichloromethane)
Absorption coefficient: 107,000
Decomposition temperature: 220°C (TG-DTA)

As for each of other example compounds, a corresponding phenylenediamine derivative is synthesized in a similar fashion to that in Example Synthesis 1, the derivative was oxidized with a corresponding silver salt or one of various other oxidizing agents and thereafter, the intermediate product was caused to react with a corresponding anion; thereby enabling synthesis to be realized.

### Example 1 (Near-infrared Absorbing Filter and Heat Resistant Stability Test)

Dissolved into 10 parts of tetrafluoropropanol was 0.1 part of each of Compounds No. 1, 2, 5 and 6 obtained in the above examples and about 1 mg of the solution was spin coated at a rotational speed 2000 rpm on a polycarbonate substrate to obtain a near-infrared absorbing filter of the invention. The near-infrared absorbing filters each were subjected to plural runs of a heat resistant stability test using a hot air dryer at 80°C for periods of 1 day, 4 days, 7 days, 11 days and 14 days. After the test, dye residual percentages were measured on the near-infrared absorbing filters with a spectrophotometer. Results of the test are shown in Table 4.

Note that furthermore, a dye film was prepared in a similar fashion to that as described above except that a hexafluoroantimonate of tetrakis{p-di(n-butyl)aminophenyl}-phenylenediimonium (a comparative specimen) was used instead of a compound as described above and evaluated.

**TABLE 4**

| (Heat Resistant Stability Test) | | | | | | |
|---|---|---|---|---|---|---|
| | Dye residual percentages (%) | | | | | |
| | Before test | After one day | After 4 days | After 7 days | After 11 days | After 14 days |
| No. 1 | 100 | 85 | 72 | 68 | 62 | 57 (Non-colored) |
| No. 2 | 100 | 94 | 82 | 79 | 73 | 69 (Non-colored) |
| No. 5 | 100 | 86 | 51 | 31 (Discolored to a greenish tone) | | |
| No. 6 | 100 | 82 | 40 | 23 (Discolored to a greenish tone) | | |
| Comparative specimen | 100 | 79 | 19 | | | |

### Example 2 (Near-infrared Absorbing Filter)

Added into PMMA (polymethylmethacrylate) was Compound No. 1 obtained in Example 1 in content of 0.03% relative to PMMA and the mixture was injection molded at 200°C to obtain filters of thickness of 1 mm and 3 mm. An average light transmittance of each of the filters obtained was measured at a wavelength in the range of 800 to 1000 nm using a spectrophotometer with the results of 20% for the 1 mm filter and 3% for the 3 mm filter.

### Example 3 (Optical Recording Medium and Heat Resistant Stability Test)

Dissolved into 10 parts of tetrafluoropropanol were 0.02 part of Compound No. 1 obtained in Example Synthesis 1 and 0.10 part of cyanine dye (produced by Fuji Photo Film Co., Ltd with a trade name OM-57) and the solution was filtered with a 0.2 µm filter to obtain a coating solution. 5 ml of the solution was dropped onto a 5 inch polycarbonate resin substrate having grooves thereon using a pipette, followed by spin coating, and the wet coat was dried to form an organic thin film recording layer. The maximum absorption wavelength of the coat film was 719 nm. A film of gold was formed on the obtained coat film with a sputtering method to obtain a reflective layer to thus manufacture an optical recording medium. The obtained optical recording medium was evaluated with a CD-R record reproducing machine with the results that recording and reproduction were possible on the optical recording medium.

### Example 4

Dissolved into 15 parts of tetrafluoropropanol was 0.3 part of cyanine dye (OM-57) and added into the solution was 0.04 part of each of Compound No. 1 (Specimen 1), Compound No. 2 (Specimen 2), Compound No. 5 (Specimen 3), an aminium form of Compound No. 1 (Specimen 4) and an aminium form of Compound No. 2 (Specimen 5) to prepare a coating solution. The coating solutions obtained each were spin coated on a polycarbonate substrate to obtain a dye film. The dye films each were subjected to a moisture-heat resistance test for 4 days in conditions of 60°C and 95% R.H. After the test, the dye films were placed into SUGA TEST INSTRUMENT Co., Ltd made Ultraviolet Long Life Carbon Arc Lightfastness Tester (at a black panel temperature of 63°C) and the dye films each were illuminated with light from the substrate side for illumination times of 10 hr, 20 hr and 40 hr to conduct a lightfastness test. After the test, residual percentages of the cyanine dye were measured on the specimens with a spectrophotometer. Results of the test are shown in Table 7.

Note that for comparison, dye films were prepared in a similar fashion to that as described above except that a hexafluoroantimonate of tetrakis{p-di(n-butyl)aminophenyl)-phenylenediimonium (Comparative Example 1) was used instead of each of Compounds Nos. 1, 2 and 5 and a hexafluoroantimonate of tetrakis{p-di(n-butyl)aminophenyl)phenyleneaminium (Comparative Example 2) was used instead of each of the aminium compounds from Compounds Nos. 1 and 2 and evaluated. Results are shown in Table 5. In Table 6, there are shown results obtained in a lightfastness test without conducting a moisture resistance test in advance.

**TABLE 5**

| (moisture test → lightfastness stability test) | | | | |
|---|---|---|---|---|
| | Cyanine dye residual percentages (%) | | | |
| | Before test | After 20 hr | After 30 hr | After 40 hr |
| Specimen 1 | 100 | 94 | 90 | 89 |
| Specimen 2 | 100 | 93 | 92 | 91 |
| Specimen 3 | 100 | 86 | 82 | 79 |
| Comp. Sp. 1 | 100 | 0 | | |
| Specimen 4 | 100 | 45 | 45 | 39 |
| Specimen 5 | 100 | 78 | 63 | 49 |
| Comp. Sp. 2 | 100 | 0 | | |

**TABLE 6**

| (lightfastness test) | | | | |
|---|---|---|---|---|
| | Cyanine dye residual percentages (%) | | | |
| | Before test | After 20 hr | After 30 hr | After 40 hr |
| Specimen 1 | 100 | 90 | 86 | 85 |
| Specimen 2 | 100 | 97 | 95 | 88 |
| Specimen 3 | 100 | 86 | 82 | 79 |
| Comp. Sp. 1 | 100 | 90 | 89 | 85 |
| Specimen 4 | 100 | 87 | 85 | 81 |
| Specimen 5 | 100 | 97 | 91 | 86 |
| Comp. Sp. 2 | 100 | 90 | 88 | 87 |

### EFFECT OF THE INVENTION

A diimonium salt compound of the invention is higher in solubility and more excellent in processability and besides, more excellent in moisture-heat resistance as compared with a conventional diimoniumsalt having a linear chain terminal group. A near-infrared absorbing filter using a diimonium salt compound of the invention is extremely excellent in heat resistance and even if the filter is subjected to a heat resistance test, the diimonium salt compound is hard to cause a reaction such as decomposition during the test and almost no coloring is recognized in a visible portion. Since a diimonium salt compound of the invention has such a feature, it can be suitably used in a near-infrared absorbing filter, a near-infrared absorbing film such as a heat insulating film, a pair of sun glasses and the like and it is especially suitable for use in a near-infrared absorbing filter for a plasma display. In the case where the above compound is incorporated in an organic dye thin film corresponding to a recording layer of an optical recordingmedium, for example, there can be provided an optical recording medium greatly improved on durability in repetitive reproduction, a moisture-heat resistance and lightfastness.

## Claims

1. A near-infrared absorbing filter, **characterized by** containing at least one compound represented by the following formula (1): 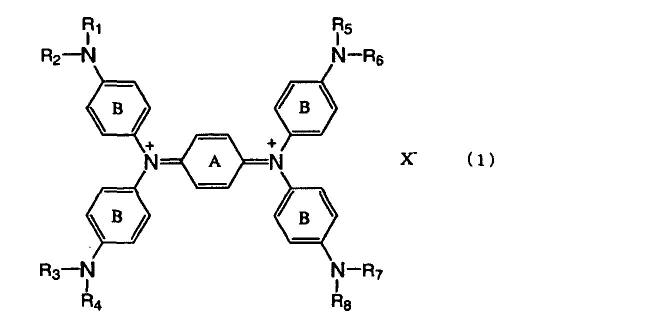 wherein R₁ to R₈ may be the same or different and at least one of them is a branched alkyl group, rings A and B may have a substituent, and X represents an anion necessary for neutralizing the electric charge.

2. A near-infrared absorbing filter according to claim 1, **characterized in that** sites other than sites 1 and 4 on each of the rings A and B are not substituted at any of them or have, as a substituent, 1 to 4 of halogen atoms, low alkyl groups, low alkoxy groups, cyano groups and/or hydroxyl groups.

3. A near-infrared absorbing filter according to claim 1 or 2, **characterized in that** the branched alkyl group of R₁ to R₈ are selected from the group consisting of a 1-methylethyl group, a 1,1-dimethylethyl group, a 1-methylpropyl group, a 2-methylpropyl group, a 1-methylbutyl group, a 2-methylbutyl group, a 3-methylbutyl group and a 2-ethylbutyl group.

4. A near-infrared absorbing filter according to any of claims 1 to 3 for a plasma display panel.

5. A near-infrared absorbing composition composed of a resin added with a compound expressed by the formula (1).

6. A diimonium salt compound expressed by the following formula (1): 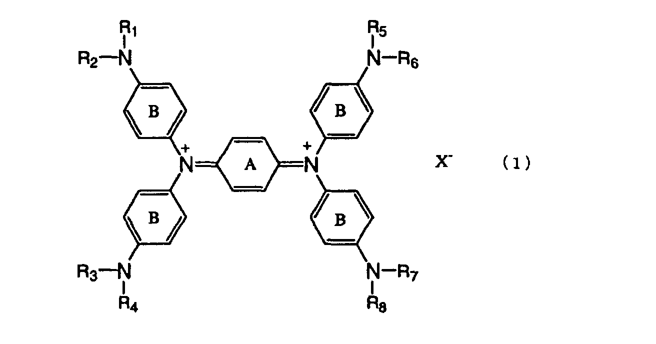 wherein R₁ to R₈ may be the same or different and at least one of them is a branched alkyl group expressed by the following formula (2), rings A and B may have a substituent, and X represents an anion necessary for neutralizing the electric charge:
―(CH₂)ₙ―R (2)
wherein n represents an integer of one or more and R represents a branched alkyl group.

7. An optical informationrecordingmediumwitharecording layer including at least one compound selected from diimonium salt compounds according to claim 6.
